# EUROPÄISCHE PATENTSCHRIFT

(11) **EP 2 132 860 B1**
(45) Veröffentlichungstag und Bekanntmachung des Hinweises auf die Patenterteilung: **06.03.2019**
(21) Anmeldenummer: 08716699.7
(22) Anmeldetag: 27.03.2008
(51) Int. Cl.: H02K 5/08, H02K 5/128

(54) **VERSIEGELTER STATOR EINES ELEKTROMOTORS FÜR ZAHNARZTBOHRER O.Ä.**
SEALED STATOR OF AN ELECTRIC MOTOR FOR A DENTISTS DRILL OR SIMILAR
STATOR SCELLÉ D'UN MOTEUR ÉLECTRIQUE POUR FRAISE DE DENTISTERIE OU ANALOGUES

(30) Priorität: 27.03.2007 DE 102007014691
(43) Veröffentlichungstag der Anmeldung: 16.12.2009
(73) Patentinhaber: Kaltenbach & Voigt GmbH, 88400 Biberach (DE)
(72) Erfinder: KLEE, Alexander, 88400 Biberach (DE); MADER, Alfons, 88316 Isny (DE)
(74) Vertreter: Thun, Clemens
(86) Internationale Anmeldenummer: PCT/EP2008/002417
(87) Internationale Veröffentlichungsnummer: WO 2008/116649

(56) Entgegenhaltungen:
- WO-A-2004/036052
- JP-A- 2005 086 905
- US-A- 4 437 027
- US-A- 4 492 889
- US-A- 5 964 694
- US-A1- 2005 112 003

## Beschreibung

Die vorliegende Erfindung betrifft einen Elektromotor, der zur Verwendung in einem zahnärztlichen, zahnmedizinischen oder dentaltechnischen Handstück vorgesehen ist, sowie einen Stator hierfür. Insbesondere betrifft die vorliegende Erfindung einen so genannten kollektorlosen Motor.

In zahnärztlichen, zahnmedizinischen oder dentaltechnischen Handstücken werden Behandlungs- bzw. Bearbeitungsinstrumente mit Hilfe eines Antriebs in Rotation bzw. Schwingungen versetzt. Der Antrieb kann einerseits in Form einer Luftturbine bzw. eines Luftmotors ausgeführt sein, alternativ hierzu hat sich in letzter Zeit auch vermehrt der Einsatz von Elektromotoren durchgesetzt. Hierbei kommen insbesondere sog. kollektor- bzw. bürstenlose Gleichstrommotoren (BLDC-Motoren) zum Einsatz, deren Rotor zumindest einen Permanentmagneten aufweist. Derartige Motoren zeichnen sich durch ihren hohen Wirkungsgrad aus.

Eine Problematik beim Einsatz derartiger Elektromotoren in den oben genannten Handstücken besteht allerdings darin, dass die Handstücke aus hygienischen Gründen regelmäßig gereinigt und sterilisiert werden müssen. Das Sterilisieren erfolgt üblicherweise dadurch, dass das Handstück einer Atmosphäre mit hoher Luftfeuchtigkeit und hoher Temperatur ausgesetzt wird, um eventuelle Organismen abzutöten. Gerade die Kombination aus hoher Luftfeuchtigkeit und hoher Temperatur hat allerdings zur Folge, dass die empfindlichen Komponenten eines Elektromotors beschädigt werden können. Problematisch hierbei sind insbesondere die funktionsrelevanten Bauteile des Stators, also beispielsweise die Statorwicklungen, die Rückschlussbleche und/oder die Kontaktstifte, da hier das Eindringen von heißem Wasserdampf zu Korrosion und/oder strukturellen Veränderungen führen und dementsprechend die Bauteile beschädigen kann.

Um Beschädigungen des Elektromotors im Rahmen der regelmäßigen Reinigung bzw. Sterilisation zu vermeiden, wurden in der Vergangenheit Handstücke konzipiert, bei denen der Motor in Form eines separaten Bauteils wahlweise in das Handstück eingesetzt bzw. wieder entnommen werden konnte. Zu Reinigungszwecken wurde dann zunächst der Motor entfernt und ausschließlich die Handstückhülse gereinigt. Auf diesem Wege wurde vermieden, dass der Motor wiederholt den hohen Temperaturen des Sterilisierens ausgesetzt wird, sodass sich dessen Lebensdauer verlängert. Nachteilig bei diesem Konzept ist allerdings, dass der Motor im Hinblick auf die weiteren Elemente des Antriebsstrangs nicht fix in dem Handstück-Gehäuse angeordnet ist, was während des Betriebs insbesondere bei hohen Drehgeschwindigkeiten zu Problemen führen kann. Eine präzise Bewegungsübertragung von dem Motor auf das Behandlungs- bzw. Arbeitswerkzeug ist nur dann sichergestellt, wenn der Motor fest und dauerhaft innerhalb des Handstücks angeordnet ist. Ferner würde eine feste Anordnung des Motors in dem Handstück zu einer leichteren und kompakteren Bausweise führen, welche die Handhabung des Handstücks für den Nutzer bzw. Zahnarzt deutlich verbessern würde.

Aus der US 5,964,694 ist ein Elektromotor mit einem Stator bekannt, der von einem Gehäuse und einem Rohr umgeben ist. Aus der Schrift US 4,437,027 ist ein Elektromotor mit einem Stator bekannt, bei dem funktionsrelevante Bauteile von einer Ummantelung umgeben sind. Die Ummantelung weist dabei eine Innenhülse auf, an deren Außenseite die funktionsrelevanten Bauteile des Stators angeordnet sind, sowie eine, die Innenhülse mit den funktionsrelevanten Bauteilen einbettende Außenhülse.

Die Schrift US 4,492,889 zeigt einen Elektromotor mit einem Stator, einer Innenhülse und einer Außenhülse. Die beiden Hülsen sind über separate Bauteile miteinander verbunden. Die Schrift WO 2004/036052A1 zeigt einen Elektromotor mit einem Rotor und einem Stator. Aus der Schrift US 2005/0112003 A1 ist ein Elektromotor mit einem Rotor und einem Stator bekannt. Der Stator ist in Epoxidharz eingegossen und auf seiner inneren Seite durch eine Hülse aus PEEK abgedichtet. Eine weitere Anordnung mit einem Stator ist aus der JP 2005-086905 A bekannt.

Der vorliegenden Erfindung liegt dementsprechend die Aufgabe zugrunde, einen neuartigen Elektromotor zu schaffen, welcher geeignet ist, den äußeren Einflüssen im Rahmen eines Sterilisiervorgangs zu widerstehen und der dementsprechend dauerhaft in einem zahnärztlichen, zahnmedizinischen oder dentaltechnischen Handstück angeordnet werden kann.

Die Aufgabe wird durch einen Elektromotor, der die Merkmale des Anspruchs 1 aufweist, sowie durch einen Stator zur Bildung eines Elektromotors gemäß Anspruch 14 gelöst. Vorteilhafte Weiterbildungen der Erfindung sind Gegenstand der abhängigen Ansprüche.

Gemäß der Erfindung wird ein Stator zur Bildung eines Elektromotors, insbesondere eines bürstenlosen Gleichstrommotors vorgeschlagen, der zur Verwendung in einem zahnärztlichen, zahnmedizinischen oder dentaltechnischen Handstück vorgesehen ist, wobei sich der Stator dadurch auszeichnet, dass er von einer Ummantelung, umgeben ist, welche
a) eine Innenhülse, an deren Außenseite funktionsrelevante Bauteile des Stators, beispielsweise Statorwicklungen, Rückschlussbleche und/oder Kontaktstifte angeordnet sind, sowie
b) eine die Innenhülse mit den funktionsrelevanten Bauteilen einbettende und aus Kunststoff bestehende Außenhülse aufweist, wobei die Innenhülse aus Kunststoff oder keramischem Material besteht und wobei die Innenhülse und die Außenhülse an beiden Endbereichen des Stators verzahnt sind.

Die erfindungsgemäße Ummantelung des Stators führt zu einer besonders guten Abdichtung und damit zu einem Schutz der funktionsrelevanten Bauteile des Stators, sodass diese während des Sterilisationsprozesses effektiv vor dem heißen Wasserdampf geschützt sind. Es ergeben sich durch die Zweiteilung von Innenhülse und Außenhülse besondere Vorteile, welche nachfolgend erläutert werden sollen.

So ist insbesondere vorgesehen, dass die Außenhülse im Spritzgussverfahren auf die Innenhülse mit den darauf angeordneten funktionsrelevanten Bauteilen aufgebracht wird. Dies hat zur Folge, dass beim Erkalten des umspritzten Kunststoffs dieser von außen auf die Innenhülse schrumpft, sodass sich im Verbindungsbereich der beiden Körper, der im Nachfolgenden auch als Naht bezeichnet wird, eine gewisse Druckspannung einstellt. Diese Naht kann hierbei durch besondere Maßnahmen, welche nachfolgend erläutert werden, lang ausgeführt werden, sodass der unter Druck stehende Wasserdampf einen verhältnismäßig langen Weg zurücklegen müsste, bis er an die funktionsrelevanten Statorkomponenten vordringen und diese schädigen kann. Die vorbeschriebene Vorgehensweise zur Herstellung des erfindungsgemäßen Stators beruht dementsprechend nicht nur auf einem verhältnismäßig einfach durchzuführenden Herstellungsverfahren sondern führt auch zu einem besonders guten Schutz der empfindlichen Statorkomponenten.

Um die Sterilisierbarkeit zusätzlich zu erhöhen, ist gemäß der Erfindung vorgesehen, dass die Innenhülse und die Außenhülse an den beiden Endbereichen des Stators miteinander verzahnt sind. Auch eine Verzahnung zwischen Innenhülse oder Außenhülse und den Kontaktstiften kann vorgesehen sein, wobei diese Verzahnung durch zumindest eine umlaufende Nut bzw. einen Steg an der Innenhülse bzw. den Kontaktstiften sowie eine entsprechende Ausgestaltung der Außenhülse oder Innenhülse gebildet ist. Die Nuten bzw. Stege können hierzu ein Rechteck-förmiges Profil aufweisen oder mittels zusätzlicher Hinterschneidungen für eine weiter verbesserte Verankerung zwischen Innenhülse und Außenhülse bzw. zwischen Außenhülse und den Kontaktstiften sorgen. Hierzu können die Nuten beispielsweise einseitig oder beidseitig ein Schwalbenschwanzprofil aufweisen. Diese besondere Art der Verzahnung führt zu weiteren Effekten, welche während des Sterilisationsprozesses auftreten und zu einer weiter verbesserten Abdichtung führen, sodass die Sterilisierbarkeit des Stators optimiert wird. Letztendlich führen diese Maßnahmen dazu, dass der Elektromotor wiederholt sterilisiert werden kann, ohne dass wie bislang eine Beschädigung der einzelnen Motorkomponenten befürchtet werden muss.

Als Material für die Innenhülse sowie für die Außenhülse wird vorzugsweise ein Hochleistungskunststoff eingesetzt, der unter dem Markennamen PEEK vertrieben wird. Diese Material zeichnet sich durch seine guten Werkstoffkennwerte, speziell auch bei hohen Temperaturen aus, wie sie bei einer Sterilisation vorliegen. Ferner ist dieser Kunststoff hydrolysebeständig. Dabei kann ferner vorgesehen sein, dass die Materialien für Innenhülse und Außenhülse unterschiedliche Wärmeausdehnungskoeffizienten aufweisen. Optional ist die Innenhülse aus Keramik gebildet.

Nachfolgend soll die Erfindung anhand der beiliegenden Zeichnung näher erläutert werden. Es zeigen:
- Figur 1: die Darstellung eines zahnärztlichen Handstücks, bei dem der Einsatz eines erfindungsgemäßen Elektromotors geplant ist;
- Figur 2: die Schnittdarstellung eines Elektromotors;
- Figur 3: die Ausgestaltung eines erfindungsgemäßen Stators im Schnitt;
- Figur 4: einen vergrößerten Ausschnitt der Darstellung von Figur 3 zur Verdeutlichung der Verzahnung zwischen Innenhülse und Außenhülse bzw. zwischen Außenhülse und Kontaktstift;
- Figur 5: eine weiter vergrößerte Schnittdarstellung der Verzahnung zur Verdeutlichung der während des Sterilisationspozesses auftretenden Effekte;
- Figuren 6 und 7: alternative Ausführungsformen der Verzahnung zwischen Innen- und Außenhülse und
- Figur 8: eine alternative Ausführungsform zur Anordnung der Statorkomponenten.

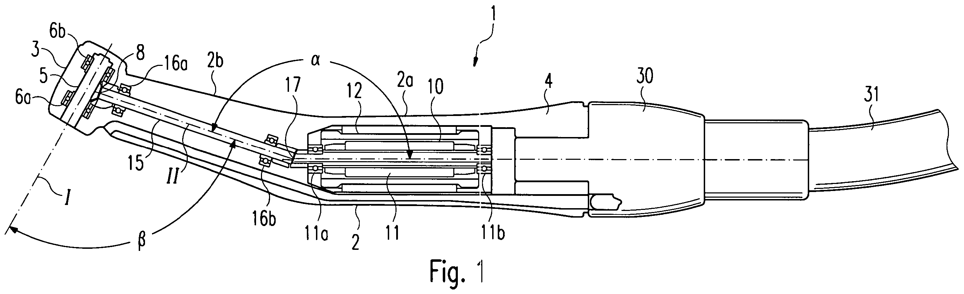

Das in Figur 1 schematisch dargestellte und allgemein mit dem Bezugszeichen 1 versehene Handstück, bei dem der erfindungsgemäße Elektromotor zum Einsatz kommt, weist eine längliche Griffhülse 2 auf, die in einen hinteren Bereich 2a sowie einen vorderen Bereich 2b unterteilt ist, wobei beide Bereiche 2a, 2b einen Winkel α von etwa 155° bis 170° miteinander einschließen. Die Handhabung des Handstücks 1 innerhalb des Mundraums eines Patienten wird durch diese Ausgestaltung vereinfacht. An dieser Stelle soll allerdings angemerkt werden, dass die Verwendung des nachfolgend noch näher beschriebenen erfindungsgemäßen Elektromotors nicht auf derartige so genannte Winkelhandstücke beschränkt ist. Stattdessen kann der Motor allgemein bei zahnärztlichen, zahnmedizinischen oder dentaltechnischen Handstücken zum Einsatz kommen.

Am vorderen Ende der Griffhülse befindet sich der Kopfbereich des Handstücks 1, der eine mittels zweier Lager 6a, 6b drehbar gelagerte Werkzeugaufnahme 5 aufweist. Diese Werkzeugaufnahme ist insbesondere zur Aufnahme von zahnärztlichen Bohrern vorgesehen. Aus ergonomischen Gründen kann ferner vorgesehen sein, dass der Kopfbereich 3 derart ausgeführt ist, dass die Längsachse I der Werkzeugaufnahme 5 mit der Achse II des vorderen Endbereichs 2b der Griffhülse einen Winkel β von etwa 100° einschließt.

Am rückseitigen Ende der Griffhülse 2 ist diese mit dem Anschlussteil 30 eines Versorgungsschlauchs 31 verbunden. Dieser Schlauch 31 führt zu einer (nicht dargestellten) Versorgungseinrichtung eines zahnärztlichen Behandlungsplatzes und dient dazu, dem Handstück 1 die zum Betrieb erforderlichen Medien zur Verfügung zu stellen. Es handelt sich hierbei insbesondere um Strom, der zum Betrieb des Motors verwendet wird. Auch zusätzliche Behandlungsmedien wie Luft und/oder Wasser können über den Schlauch 31 zu dem Handstück 1 geleitet werden. Der Anschluss des Handstücks 1 erfolgt dann über ein im rückwärtigen Ende befindliches Kupplungselement 4, über welches eine Verbindung mit dem Schlauchanschluss 30 erfolgt.

Zahnärztliche Handstücke können grundsätzlich gesehen mit unterschiedlichen Antrieben ausgestaltet sein. Klassischerweise werden beispielsweise Luft- bzw. Turbinenantriebe oder elektrische Antriebe eingesetzt. Eine Turbine zeichnet sich hierbei durch ihre kompakte Bauweise aus, andererseits ist die Betriebssicherheit im Vergleich zu einem Elektromotor geringer. Ferner bestehen im Vergleich zu einem Elektromotor nur begrenzte Möglichkeiten, die zu übertragende Leistung zu steuern.

Elektromotoren hingegen wiesen bislang den Nachteil auf, dass durch ihren Einsatz die Bauweise des Handstücks vergrößert wurde. Ferner mussten Maßnahmen getroffen werden, um sicherzustellen, dass die empfindlichen Komponenten des Motors während des Sterilisierungsprozesses nicht beschädigt werden. Üblicherweise wurden deshalb in der Vergangenheit zahnärztliche Handstücke mit einem Elektromotor derart ausgeführt, dass der Motor vor der Reinigung bzw. Sterilisierung des Handstücks entfernt werden konnte.

Im Gegensatz dazu ist bei dem Handstück 1 gemäß Figur 1 vorgesehen, dass der mit dem Bezugszeichen 10 versehene Motor dauerhaft innerhalb der Handstückhülse 2 angeordnet ist. Der Motor 10 weist einerseits einen fest - d.h. nicht drehbar - in der Handstückhülse 2 gelagerten Stator 12 sowie andererseits einen gegenüber diesem Stator 12 mit Hilfe zweier Lager 11a und 11b drehbar gelagerten Rotor 11 auf. Die von dem Motor 10 erzeugte Drehbewegung wird mittels einer Welle 15, welche sich durch den vorderen Griffhülsenbereich 2b erstreckt, auf die Werkzeugaufnahme 5 übertragen. Diese Welle 15, welche mittels zweier Wälzlager 16a und 16b drehbar gelagert ist, ist hierzu an ihrem rückwärtigen Ende über Kniegetriebe 17 mit dem Rotor 11 des Elektromotors 10 gekoppelt, am vorderen Ende erfolgt eine Kopplung 15 und Werkzeugaufnahme 5 mittels eines Kopfgetriebes 8. Der Vorteil dieser fixen Anordnung des Motors 10 in der Handstückhülse 2 besteht darin, dass - wie dargestellt - lediglich drei drehbar gelagerte Achsen bzw. Wellen (der Rotor 11, die Zwischenwelle 15 sowie die Werkzeugaufnahme 5) erforderlich sind, um mittels der an das Handstück 1 angelegten Spannung den Bohrer bzw. allgemein das Werkzeug in Rotation zu versetzen.

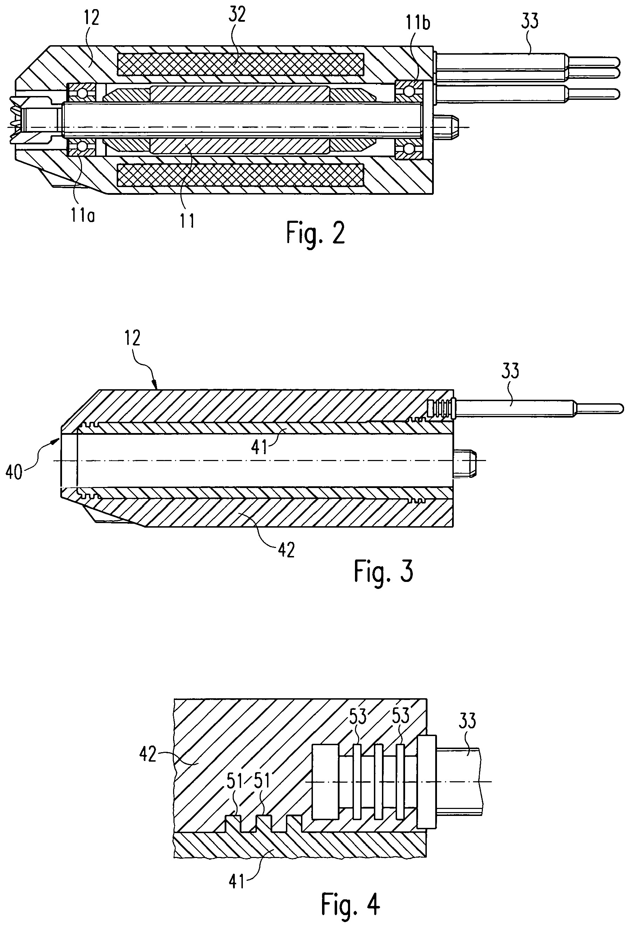

Die dauerhafte Anordnung des Motors 10 in der Handstückhülse 2 bedeutet allerdings, dass besondere Maßnahmen getroffen werden müssen, um Beschädigungen des Motors 10 während des Sterilisierens zu vermeiden. Bei diesem in Figur 2 in Schnittdarstellung dargestellten Motor 10 handelt es sich vorzugsweise um einen kollektorlosen bzw. bürstenlosen Gleichstrommotor mit einem Permanentmagnetrotor. Derartige so genannte BLDC (brushless direct current)-Motoren zeichnen sich durch ihren hohen Wirkungsgrad aus, der sich insbesondere auch durch eine entsprechende Ansteuerung der Statorwicklungen ergibt. Die auf die Lage bzw. die Winkelstellung des Rotors 11 angepasste Bestromung der Statorwicklungen, die so genannte Kommutierung wird durch eine entsprechende Steuerelektronik sichergestellt, welche die Lager des Rotors 11 permanent detektiert und dementsprechend die Wicklungen mit Strom einer geeigneten Phase versorgt. Üblicherweise kann mit derartigen miniaturisierten Motoren eine Leistung von mehr als 10 Watt, insbesondere eine Leistung im Bereich zwischen 10 und 40 Watt, kurzzeitig auch höher erzielt werden.

Besonders gefährdet während des Sterilisierens sind die funktionsrelevanten Bauteile des Stators 12 des Motors 10, welche in Figur 2 schematisch mit dem Bezugszeichen 32 angedeutet sind. Diese umfassen beispielsweise die Statorwicklungen sowie die Rückschlussbleche. Auch im Anschlussbereich der Kontaktstifte 33 des Stators 12 können beim Eindringen von heißem Wasserdampf, der zum Sterilisieren des Handstücks verwendet wird, Probleme auftreten.

Zum Schutz dieser Komponenten ist gemäß der vorliegenden Erfindung vorgesehen, dass diese in spezieller Weise ummantelt sind. Die spezielle Ausgestaltung dieser erfindungsgemäßen Ummantelung soll nachfolgend anhand der Figuren 3 bis 8 näher erläutert werden. Diese Figuren zeigen Schnittdarstellungen des Stators, wobei auf die Darstellung der funktionsrelevanten Stator-Komponenten verzichtet wurde, um besser den Aufbau der Ummantelung zeigen zu können.

Grundsätzlich gesehen prägen zwei Kerngedanken den erfindungsgemäßen Aufbau des Stators 12. So ist zum einen zunächst vorgesehen, dass der als Hohlzylinder ausgezeichnete Stator 12 durch zwei Hülsen gebildet wird, zum einen eine sich fast durchgehend erstreckende Innenhülse 41 und zum anderen eine sich an die Innenhülse 41 anschließende Außenhülse 42. Auf der Innenhülse 41 sind die funktionsrelevanten Bauteile, also insbesondere die Wicklungen, die Rückschlussbleche und die Kontaktstifte befestigt. Das auf diesem Wege erhaltene Paket wird dann zur weiteren Herstellung des Stators 12 bzw. der Ummantelung 40 in ein Spritzgusswerkzeug eingelegt und anschließend mit Kunststoff umspritzt, um auf diesem Wege die Außenhülse 42 zu bilden. Gemäß einem ersten bevorzugten Ausführungsbeispiel wird zur Bildung der Innen- also auch der Außenhülse 41, 42 das Kunststoffmaterial PEEK verwendet, das sowohl in leicht-fließenden als auch in glasfaser-verstärkten Varianten vorliegt. Dieses Material hat sich als besonders vorteilhaft im Hinblick auf die angestrebte Sterilisierbarkeit erwiesen, da es auch bei hohen Temperaturen gute Werkstoffkennwerte aufweist und ferner hydrolysebeständig ist. Eine zweite vorteilhafte Ausgestaltung besteht darin die Innenhülse 41 aus einem Keramikmaterial zu bilden. Es hat sich gezeigt, dass in diesem Fall Vorteile hinsichtlich der Verschleißbeständigkeit, der hohen Härte der Innenhülse sowie einer besseren Widerstandsfähigkeit gegen Verzug erzielt werden können.

Die zuvor beschriebene Vorgehensweise zur Herstellung des Stators 12 bringt zunächst einmal den Vorteil mit sich, dass der Stator 12 in verhältnismäßig einfacher Weise hergestellt werden und trotz allem die empfindlichen Komponenten ummantelt werden können. Ein besonderer Vorteil besteht allerdings darin, dass beim Erkalten des umspritzten Kunststoffs zur Bildung der Außenhülse 42 dieser von außen auf die Innenhülse 41 aufschrumpft. Dies hat zur Folge, dass an der Verbindungsstelle zwischen beiden Hülsen 41, 42, welche im folgenden auch als Naht bezeichnet wird, eine gewisse Druckspannung einstellt. Diese Naht ist hierbei möglichst lang ausgeführt, sodass während des Sterilisationsprozesses der unter Druck stehende Wasserdampf einen sehr langen Weg zurücklegen muss, bevor er an die funktionsrelevanten Statorkomponenten vordringen und diese schädigen kann.

Durch den oben beschriebenen zweiteiligen Aufbau der Ummantelung 40 des Stators 12 wird also bereits ein verbesserter Schutz für die empfindlichen Statorkomponenten erzielt. Berücksichtigt man allerdings die physikalisch bedingte Wärmeausdehnung sämtlicher Bauteile des Stators 12, so könnte sich zusätzlich ein weiteres Problem ergeben. Wird nämlich der vollständige Stator 12 während des Sterilisierens aufgeheizt, so steigt das Volumen der darin befindlichen Bauteile an. Weist ein Material, das radial gesehen außen im Stator 12 verbaut ist, einen größeren Wärmeausdehnungskoeffizienten auf als das innen liegende Material, so wird die Verbindungsnaht geöffnet, falls die Materialien nicht in ihrer Dehnung behindert werden, zumindest allerdings wird die oben angesprochene Druckspannung reduziert. Die gleiche Problematik kann sich auch für die mit ihren Endbereichen eingespritzten Kontaktstifte 33 ergeben. Dehnt sich das Material dieser Stifte 33 weniger stark aus als der sie umgebende Kunststoff der Außenhülse 42, so könnte ein Spalt entstehen, in den Wasserdampf eindringen kann. In axialer Richtung kann es durch die im Vergleich zum Durchmesser des Stators 12 größere Abmessung und damit nominal höhere Dehnung genau an der Nahtstelle zu Relativbewegungen der beiden Hülsen 41, 42 kommen, falls die Wärmeausdehnungskoeffizienten nicht identisch sind.

Um dementsprechend die Sterilisierfähigkeit zusätzlich zu optimieren wurden weitere Maßnahmen getroffen, welche ein Öffnen der Naht und dementsprechend die oben angesprochene Relativbewegung unterbinden. Diese Maßnahmen sollen nunmehr anhand der vergrößerten Ausschnitte der Figuren 4 bis 7 erläutert werden.

Die erfindungsgemäße Weiterbildung besteht darin, dass die Innenhülse 41 und Außenhülse 42 an den beiden axialen Endbereichen des Stators 12 miteinander verzahnt sind. Ferner ist auch eine Verzahnung zwischen Außenhülse 42 und den Endbereichen der Kontaktstifte 33 vorgesehen.

Wie die vergrößerte Darstellung von Figur 4 zeigt, wird die Verzahnung zwischen Innenhülse 41 und Außenhülse 42 dadurch erreicht, dass die Innenhülse mehrere umlaufende Stege 51 bzw. darin gebildete Nuten aufweist. Hierdurch wird ein mechanischer Formschluss erzeugt, d. h. die Kunststoffmaterialien von Innenhülse 41 und Außenhülse 42 greifen kammartig ineinander und verzahnen sich. In gleicher Weise weisen auch die Endbereiche der Kontaktstifte 33 entsprechende umlaufende Stege 53 bzw. dazwischen gebildete Nuten auf. Auch hier wird beim Umspritzen der Anordnung mit dem Kunststoffmaterial der Außenhülse 42 der mechanische Formschluss erzielt.

Die Stege 51 bzw. 53 der Innenhülse 41 sowie der Kontaktstifte 33 weisen in der dargestellten Ausführungsform sich in radialer Richtung ausdehnende, parallele Flächen auf. Auf diese Weise wird der Weg, den der heiße Wasserdampf zurücklegen müsste, um in das innere des Stators 12 vorzudringen, vergrößert. Dementsprechend ist also eine Art Labyrinthdichtung gebildet, durch welche der Schutz der empfindlichen Statorkomponenten weiter verbessert wird.

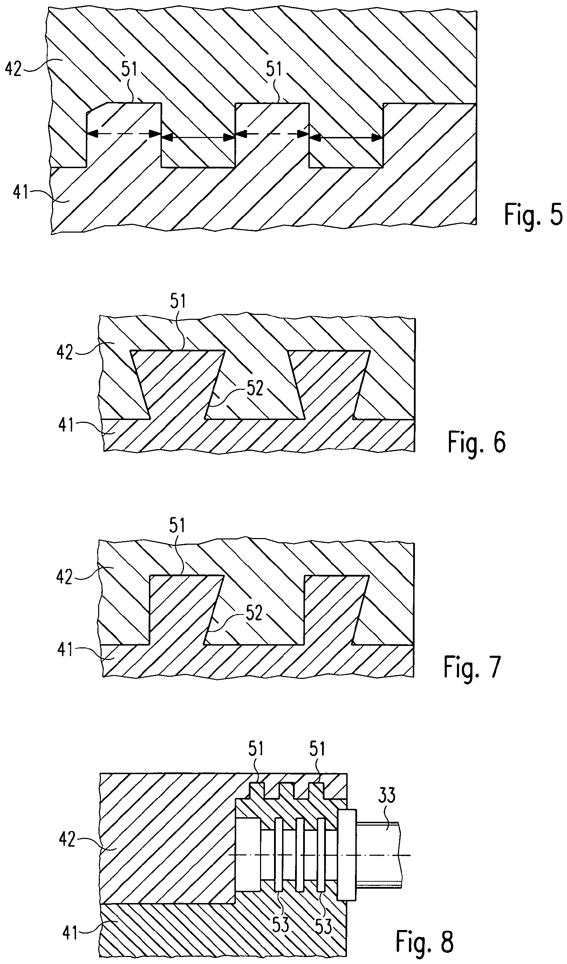

Durch die erfindungsgemäße Verzahnung ergibt sich allerdings ferner ein weiterer Effekt, der dazu führt, dass die Wärmedehnung der Materialien gezielt zur Abdichtung genutzt werden kann. Durch die Gegenseitige Verzahnung der Komponenten behindern sich nämlich die Ausdehnungen in axialer Richtung innerhalb der Stege/Nuten gegenseitig, was zur Folge hat, dass - wie in Figur 5 angedeutet - eine Druckspannung an den sich parallel gegenüberliegenden Kontaktflächen entsteht.

Über die gesamte Länge des Stators 12 hinweg gesehen kommt schließlich noch ein dritter Effekt zum tragen. Unterscheiden sich nämlich die Wärmeausdehnungskoeffizienten der beiden Hülsen 41, 42, so stellen sich während der Sterilisation unterschiedliche Längenänderungen für beide Komponenten ein. Die Nuten bzw. Stege behindern diese Bewegung, sodass wiederum eine zusätzliche Druckspannung an den entsprechenden Flächen auftritt. Diese Effekte führen letztendlich dazu, dass an der Verbindungsnaht zwischen Innenhülse 41 und Außenhülse 42 genau dann eine zusätzliche Dichtwirkung hervorgerufen wird, wenn im Sterilisationsprozess bei hoher Temperatur und unter Druck der Stator von Wasserdampf umgeben ist.

Wie die alternativen Ausführungsformen der Figuren 6 und 7 zeigen, können die Stege bzw. Nuten auch alternativ mit einem einseitigen oder zweiseitigen Hinterschnitt 52 ausgeführt sein. Diese Maßnahme hat zur Folge, dass auch ein Abheben in radialer Richtung behindert wird. Das Schwalbenschwanz-artige Profil erweist sich in diesem Zusammenhang als besonders vorteilhaft, weil durch den beidseitigen Hinterschnitt 52 zusätzlich eine Ausdehnung in radialer Richtung behindert wird und so ein Kontaktdruck auch an der Kontaktstelle im Grund der Nut zwischen zwei benachbarten Stegen 51 erzeugt wird.

Die oben angesprochenen Effekte können hinsichtlich ihrer Wirkung durch die Wahl der Materialien beeinflusst werden. Über die Größe der Differenz der Wärmeausdehnungskoeffizienten kann insbesondere Einfluss auf die Höhe des Drucks an den Verbindungsstellen genommen werden. Je höher die Differenz ist, desto höher ist auch der entsprechende Druck, wobei allerdings zu große Unterschiede zu vermeiden sind, weil es dann zu mechanischen Schädigungen der Struktur kommen könnte. Beispielsweise kann vorteilhaft vorgesehen sein, für die Innenhülse 41 ein Material mit einem etwas höheren Ausdehnungskoeffizienten zu wählen, da in diesem Fall der außen liegende Körper, also die Außenhülse 42 die Innenhülse 41 in ihrer Ausdehnung behindert, was wiederum dazu führt, dass der Kontaktdruck an der Verbindungsnaht erhöht wird. Wie bereits oben erwähnt wurde, wäre es allerdings auch denkbar, die Innenhülse aus Keramik zu bilden. Der soeben angesprochene Effekt, dass aufgrund eines höheren Ausdehnungskoeffizienten der Innenhülse der Kontaktdruck an der Verbindungsnaht nochmals zusätzlich erhöht wird, würde in diesem Fall zwar nicht auftreten, allerdings könnten den Aufgrund der Materialeigenschaften von Keramik die Laufeigenschaften des Motors zusätzlich verbessert werden.

Figur 8 zeigt schließlich eine alternative Ausführungsform zur Ausgestaltung des erfindungsgemäßen Stators 12. Hierbei sind die Anschlussbereich der Kontaktstifte 33 nicht in die Außenhülse 42 sondern stattdessen in die Innenhülse 41 eingebettet. Sie werden in diesem Fall während der Herstellung der Innenhülse 41 mit dem entsprechenden Material umgeben, insbesondere umspritzt. Auch in diesem Fall ergeben sich die oben beschriebenen Effekte zur Abdichtung zwischen Innenhülse 41 und Kontaktstiften 33. Fernern ist wiederum eine entsprechende Verzahnung zwischen Innenhülse 41 und Außenhülse 42 vorgesehen.

Letztendlich wird durch die oben beschriebenen Maßnahmen also ein Stator geschaffen, der aufgrund seines Aufbaus dazu geeignet ist, den äußeren Einflüssen während des Sterilisierprozesses entgegenzuwirken. Insbesondere sind die empfindlichen in die Ummantelung eingebetteten Komponenten des Stators derart gut geschützt, dass keine Beschädigung durch den heißen Wasserdampf zu befürchten ist. Der erfindungsgemäße Motor eignet sich dementsprechend in besonders hervorragender Weise zum Einsatz in Geräten, welche wiederholt sterilisiert werden müssen.

Abschließend ist anzumerken, dass das zuvor beschriebene Konzept der Ummantelung empfindlicher Komponenten zwar im Rahmen der Beschreibung eines Elektromotors zur Verwendung bei zahnärztlichen, zahnmedizinischen oder dentaltechnischen Handstücken beschrieben wurde, allerdings ist dieses Konzept grundsätzlich zum Einsatz bei Bauteilen geeignet, bei denen Körper bzw. Bauelemente zum Schutz vor Sterilisationseinflüssen mit einem Umhüllungsmaterial umspritzt oder vergossen werden. Bei diesem Umhüllungsmaterial muss es sich nicht zwangsläufig um das oben angesprochene PEEK handeln. Stattdessen können generell Kunststoffe, Silikon, Kunstharze oder auch Keramikmaterialien verwendet werden.

## Patentansprüche

1. Stator (12) zur Bildung eines Elektromotors (10), der zur Verwendung in einem zahnärztlichen, zahnmedizinischen oder dentaltechnischen Handstück vorgesehen ist, wobei funktionsrelevante Bauteile (32) des Stators (12), beispielsweise Statorwicklung(en), Rückschlussbleche und/oder Kontaktstifte des Stators (12) von einer Ummantelung (40) umgeben sind, welche
a) eine Innenhülse (41), an deren Außenseite die funktionsrelevanten Bauteile (32) des Stators (12) angeordnet sind, sowie
b) eine, die Innenhülse (41) mit den funktionsrelevanten Bauteilen (32) einbettende, aus Kunststoff bestehende Außenhülse (42) aufweist,
**dadurch gekennzeichnet,**
**dass** die Innenhülse (41) aus Kunststoff oder aus einem Keramik-Material besteht, wobei die Innenhülse (41) und die Außenhülse (42) an den beiden Endbereichen des Stators (12) miteinander verzahnt sind.

2. Stator nach Anspruch 1,
**dadurch gekennzeichnet,**
**dass** die Innenhülse (41) oder die Außenhülse (42) mit Kontaktstiften (33) des Stators (12) verzahnt ist.

3. Stator nach Anspruch 1 oder 2,
**dadurch gekennzeichnet,**
**dass** die Verzahnung durch mindestens einen umlaufenden Steg (51, 53) bzw. eine umlaufende Nut an der Innenhülse (41) bzw. den Kontaktstiften (33) sowie eine entsprechende Ausgestaltung der Außenhülse (42) oder Innenhülse (41) gebildet ist.

4. Stator nach Anspruch 3,
**dadurch gekennzeichnet,**
**dass** der Steg (51, 53) bzw. die Nut ein rechteck-förmiges Profil aufweist.

5. Stator nach Anspruch 3,
**dadurch gekennzeichnet,**
**dass** der Steg (51, 53) bzw. die Nut einseitig oder beidseitig Hinterschneidungen (52) aufweist.

6. Stator nach Anspruch 5,
**dadurch gekennzeichnet,**
**dass** der Steg (51, 53) bzw. die Nut ein Schwalbenschwanzprofil aufweist.

7. Stator nach einem der vorherigen Ansprüche,
**dadurch gekennzeichnet,**
**dass** die Außenhülse (42) aus PEEK besteht.

8. Stator nach einem der vorhergehenden Ansprüche,
**dadurch gekennzeichnet,**
**dass** die Innenhülse (41) aus PEEK besteht.

9. Stator nach einem der vorherigen Ansprüche,
**dadurch gekennzeichnet,**
**dass** Außenhülse (42) und Innenhülse (41) unterschiedliche Wärmeausdehnungskoeffizienten aufweisen.

10. Stator nach einem der vorherigen Ansprüche,
**dadurch gekennzeichnet,**
**dass** die Endbereiche der Kontaktstifte (33) in die Innenhülse (41) eingebettet sind.

11. Elektromotor (10) zur Verwendung in einem zahnärztlichen, zahnmedizinischen oder dentaltechnischen Handstück mit einem drehbar gelagerten Rotor (11) sowie einem den Rotor (11) umgebenden Stator (12) nach einem der vorhergehenden Ansprüche.

## Claims

1. Stator (12) for forming an electric motor (10) which is intended to be used in a dental handpiece, wherein functionally relevant components (32) of the stator (12), for example stator winding(s), return path plates and/or contact pins of the stator (12) are surrounded by a sheathing (40) which has
a) an inner sleeve (41), on the outer side of which the functionally relevant components (32) of the stator (12) are arranged, and
b) an outer sleeve (42) that embeds the inner sleeve (41) with the functionally relevant components (32) and consists of plastic,
**characterized**
**in that** the inner sleeve (41) consists of plastic or of a ceramic material, wherein the inner sleeve (41) and the outer sleeve (42) are interlocked with one another in the two end regions of the stator (12).

2. Stator according to Claim 1,
**characterized**
**in that** the inner sleeve (41) or the outer sleeve (42) is interlocked with contact pins (33) of the stator (12).

3. Stator according to Claim 1 or 2,
**characterized**
**in that** the interlock is formed by at least one encircling rib (51, 53) on and/or an encircling groove in the inner sleeve (41) and/or the contact pins (33), respectively, and a corresponding configuration of the outer sleeve (42) or inner sleeve (41).

4. Stator according to Claim 3,
**characterized**
**in that** the rib (51, 53) or the groove has a rectangular profile.

5. Stator according to Claim 3,
**characterized**
**in that** the rib (51, 53) or the groove has undercuts (52) on one or both sides.

6. Stator according to Claim 5,
**characterized**
**in that** the rib (51, 53) or the groove has a dovetail profile.

7. Stator according to one of the preceding claims,
**characterized**
**in that** the outer sleeve (42) consists of PEEK.

8. Stator according to one of the preceding claims,
**characterized**
**in that** the inner sleeve (41) consists of PEEK.

9. Stator according to one of the preceding claims,
**characterized**
**in that** the outer sleeve (42) and inner sleeve (41) have different coefficients of thermal expansion.

10. Stator according to one of the preceding claims,
**characterized**
**in that** the end regions of the contact pins (33) are embedded in the inner sleeve (41).

11. Electric motor (10) for use in a dental handpiece, having a rotatably mounted rotor (11) and a stator (12) according to one of the preceding claims surrounding the rotor (11).

## Revendications

1. Stator (12) pour la formation d'un moteur électrique (10), qui est prévu pour l'utilisation dans une pièce à main de dentisterie, d'odontologie ou de technique dentaire, dans lequel des composants (32) fonctionnels du stator (12), par exemple un/des enroulement(s) de stator, tôles de retour et/ou tiges de contact du stator (12) sont entourés par une enveloppe (40) qui
a) présente une douille intérieure (41) sur le côté extérieur de laquelle les composants fonctionnels (32) du stator (12) sont agencés, ainsi que
b) une douille extérieure (42) se composant de matière plastique, intégrant la douille intérieure (41) avec les composants (32) fonctionnels,
**caractérisé en ce que** la douille intérieure (41) se compose de matière plastique ou d'un matériau céramique, dans lequel la douille intérieure (41) et la douille extérieure (42) sont engrenées l'une avec l'autre au niveau des deux zones d'extrémité du stator (12).

2. Stator selon la revendication 1, **caractérisé en ce que** la douille intérieure (41) ou la douille extérieure (42) est engrenée avec des tiges de contact (33) du stator (12).

3. Stator selon la revendication 1 ou 2, **caractérisé en ce que** la denture est formée par au moins une nervure périphérique (51, 53) ou une rainure périphérique sur la douille intérieure (41) ou les tiges de contact (33) ainsi qu'une configuration correspondante de la douille extérieure (42) ou de la douille intérieure (41).

4. Stator selon la revendication 3, **caractérisé en ce que** la nervure (51, 53) ou la rainure présente un profil rectangulaire.

5. Stator selon la revendication 3, **caractérisé en ce que** la nervure (51, 53) ou la rainure présente des contre-dépouilles (52) d'un côté ou des deux côtés.

6. Stator selon la revendication 5, **caractérisé en ce que** la nervure (51, 53) ou la rainure présente un profil en queue d'aronde.

7. Stator selon l'une quelconque des revendications précédentes, **caractérisé en ce que** la douille extérieure (42) se compose de PEEK.

8. Stator selon l'une quelconque des revendications précédentes, **caractérisé en ce que** la douille intérieure (41) se compose de PEEK.

9. Stator selon l'une quelconque des revendications précédentes, **caractérisé en ce que** la douille extérieure (42) et la douille intérieure (41) présentent des coefficients de dilatation thermique différents.

10. Stator selon l'une quelconque des revendications précédentes, **caractérisé en ce que** les zones d'extrémité des tiges de contact (33) sont intégrées dans la douille intérieure (41).

11. Moteur électrique (10) pour l'utilisation dans une pièce à main de dentisterie, d'odontologie ou de technique dentaire avec un rotor (11) logé de manière rotative ainsi qu'un stator (12) entourant le rotor (11) selon l'une quelconque des revendications précédentes.
